(19) Europäisches Patentamt / European Patent Office / Office européen des brevets

(11) **EP 4 542 452 A1**

(12) **EUROPEAN PATENT APPLICATION**

(43) Date of publication:
**23.04.2025 Bulletin 2025/17**

(21) Application number: **24198411.1**

(22) Date of filing: **04.09.2024**

(51) International Patent Classification (IPC):
**G06N 5/01** (2023.01)          **G06N 7/01** (2023.01)
**G06N 10/60** (2022.01)

(52) Cooperative Patent Classification (CPC):
**G06N 5/01; G06N 7/01;** G06N 10/60

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.10.2023   JP 2023178238**

(71) Applicant: **FUJITSU LIMITED
Kawasaki-shi, Kanagawa 211-8588 (JP)**

(72) Inventors:
• **Maruo, Akito
  Kawasaki-shi, Kanagawa, 211-8588 (JP)**
• **Jippo, Hideyuki
  Kawasaki-shi, Kanagawa, 211-8588 (JP)**
• **Soeda, Takeshi
  Kawasaki-shi, Kanagawa, 211-8588 (JP)**

(74) Representative: **Hoffmann Eitle
Patent- und Rechtsanwälte PartmbB
Arabellastraße 30
81925 München (DE)**

(54) **ARITHMETIC PROGRAM, ARITHMETIC METHOD, AND INFORMATION PROCESSING DEVICE**

(57)   An arithmetic program comprising instructions which, when executed by a computer, cause the computer to repeatedly execute processing including: generating a plurality of training data sets from a training data group; creating a plurality of Ising models by creating the Ising models for each of the plurality of training data sets; creating a combined Ising model by combining the plurality of Ising models according to an average and a deviation of coefficients of the plurality of Ising models; searching for a recommended point for the combined Ising model; and adding the recommended point and an evaluation value of the recommended point to the training data group.

## FIG. 4A

100

STORAGE UNIT — 10

INITIAL POINT GENERATION UNIT — 20

EVALUATION UNIT — 30

FMDA EXECUTION UNIT — 40

TRAINING DATA UPDATE UNIT — 50

OUTPUT UNIT — 60

EP 4 542 452 A1

**Description**

FIELD

The embodiments discussed herein are related to an arithmetic program, an arithmetic method, and an information processing device.

BACKGROUND

A technique for performing optimization using a model is disclosed.

International Publication Pamphlet No. WO 2021-059604, Japanese National Publication of International Patent Application No. 2021-504836, and Japanese Laid-open Patent Publication No. 2021-149160 are disclosed as related art.

SUMMARY

TECHNICAL PROBLEM

For example, a technique for achieving optimization by sampling using an Ising model in a QUBO format is an approach for sequentially sampling recommended points on the model, and thus, a sampling region may be likely to be limited. For this reason, the number of times of sampling may be likely to increase, as a result.

In one aspect, an object of the present case is to provide an arithmetic program, an arithmetic method, and an information processing device capable of reducing the number of times of sampling.

SOLUTION TO PROBLEM

According to an aspect of the embodiments, there is provided an arithmetic program comprising instructions which, when executed by a computer, cause the computer to repeatedly execute processing including: generating a plurality of training data sets from a training data group; creating a plurality of Ising models by creating the Ising models for each of the plurality of training data sets; creating a combined Ising model by combining the plurality of Ising models according to an average and a deviation of coefficients of the plurality of Ising models; searching for a recommended point for the combined Ising model; and adding the recommended point and an evaluation value of the recommended point to the training data group.

ADVANTAGEOUS EFFECTS OF INVENTION

The number of times of sampling may be reduced.

BRIEF DESCRIPTION OF DRAWINGS

FIG. 1 is a diagram illustrating a search for a solution in a QUBO format;
FIG. 2A is a diagram illustrating training data for a structure and a characteristic, and FIG. 2B is an example of output of a factorization machine with digital annealer (FMDA);
FIG. 3 is a flowchart representing an execution procedure in a sampling technique using a model in the QUBO format;
FIG. 4A is a block diagram illustrating an overall configuration of an information processing device, and FIG. 4B is a block diagram illustrating a hardware configuration of the information processing device;
FIG. 5 is a flowchart representing an exemplary operation of the information processing device;
FIG. 6 is a flowchart representing details of step S13;
FIG. 7 is a diagram in which an embodiment is summarized in order;
FIG. 8A is a diagram illustrating an optimization problem for a magnetic shield, FIG. 8B is a diagram illustrating locations by a Gaussian basis function, and FIG. 8C is a diagram illustrating magnetic flux lines generated from a coil;
FIG. 9 is a diagram illustrating positive locations and negative locations;
FIG. 10 is a diagram illustrating a shape function;
FIG. 11 is a diagram indicating a simulation result; and
FIG. 12 is a diagram indicating a simulation result.

DESCRIPTION OF EMBODIMENTS

As a technique for searching a large number of combinations, orders, and the like for a good solution having a high evaluation value, a binary variable sampling technique is used. As the binary variable sampling technique, a sampling technique for randomly performing sampling, a sampling technique using an Ising model in a QUBO format, or the like is exemplified.

The sampling technique for randomly performing sampling allows sampling to be easily performed, but has a disadvantage that sampling efficiency is poor, and the number of times of sampling will increase in order to obtain a good solution with high accuracy.

For example, as the sampling technique using a model in the QUBO format, a factorization machine with quantum annealing (FMQA) or the like is exemplified. FMQA is an approach in which quantum annealing (QA) and a factorization machine (FM; machine learning approach) are combined. FMQA is an approach for performing interactive sampling in which an FM model in the QUBO format is created from training data, a good solution is obtained by QA an evaluation value of the good solution is analyzed by a solver, and a result is added to the training data. Besides, a factorization machine with digital annealer (FMDA) technique is exemplified as a sampling technique using a model in the QUBO format. FMDA is obtained by replacing the QA portion of FMQA with a digital annealer (DA).

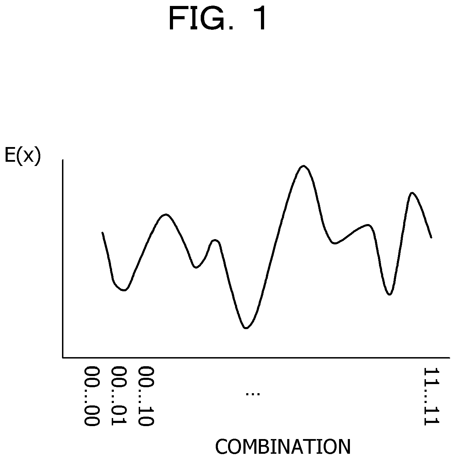

Here, the QUBO format stands for quadratic unconstrained binary optimization that is a format in which binary optimization is allowed without a secondary constraint. The QUBO format can be expressed, for example, as in the following formula. Note that $x_i = 0$ or 1 (i = 1, ..., N) holds. A coupling coefficient of $x_i$ and $x_j$ is denoted by $W_{ij}$. A bias coefficient of $x_i$ is denoted by $b_i$. The first term on the right side is a quadratic term and represents an interaction. The second term on the right side is a linear term and represents a bias action. The third term on the right side is a constant term. In the QUBO format, as illustrated in FIG. 1, a good solution x for minimizing E(x) representing energy is searched for, in accordance with the following formula.

[Mathematical Formula 1]

$$E(\boldsymbol{x}) = -\sum_{i,j} W_{ij} x_i x_j - \sum_i b_i x_i + \text{const.}$$

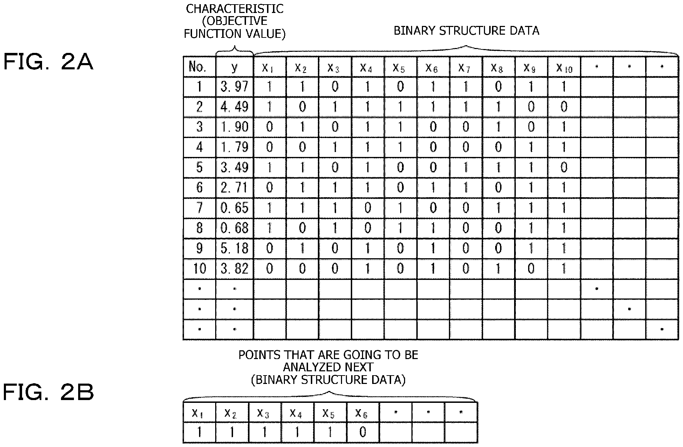

Here, an outline of the FMDA will be described as an example of a sampling technique using an Ising model in the QUBO format. FIG. 2A is a diagram illustrating training data for a structure and a characteristic. The characteristics represented by the values of y are the objective function values. Data represented by an n-dimensional vector of x is binary structure data. The data in FIG. 2A is input to the FMDA. FIG. 2B is an example of output (recommended points) of the FMDA. The recommended points are evaluated by being analyzed by a solver.

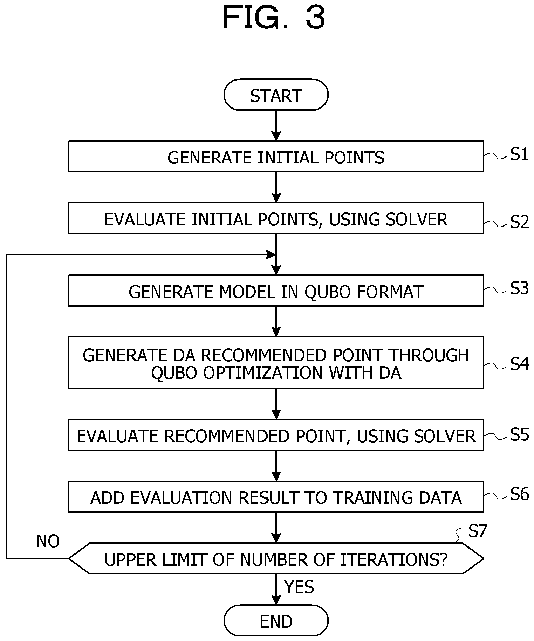

FIG. 3 is a flowchart representing an execution procedure in a sampling technique using an Ising model in the QUBO format. As illustrated in FIG. 3, first, a training data group is generated by randomly generating training data (initial points) (step S1). The number of pieces of training data to be generated is determined by user setting.

Next, an evaluation value of the initial points is calculated using the solver (step S2). The evaluation value is an index for assessing whether or not the initial point or a recommended point to be described later is good. Through the above steps, an initial training data group in which the initial points and the evaluation values are collected as sets is generated.

Next, an FM is generated with the training data group, whereby an Ising model in the QUBO format is created (step S3). Since the FM is in the QUBO format, generating an FM is equivalent to generating an Ising model in the QUBO format. Any other machine learning model can also be used as long as the machine learning model can generate an Ising model in the QUBO format.

Next, the created Ising model in the QUBO format is optimized using a DA and a good solution (DA recommended point) giving the best evaluation value is generated (step S4).

Next, an evaluation value of the DA recommended point is calculated using the solver (step S5).

Next, an evaluation result (a set of the recommended point and the evaluation value) is added to the training data group as training data (step S6).

Next, it is verified whether or not the number of iterations has reached an upper limit (step S7). In a case where it is verified as "No" in step S7, step S3 and the subsequent steps are executed again. This ensures that steps S3 to S6 are repeated until an end condition is satisfied. In a case where it is verified as "Yes" in step S7, the execution of the flowchart ends. Note that, as the end condition, a condition such as a case where an amount of change in the objective function is less than a threshold value over a certain period of time can be used.

The training data group is updated by the above procedure, allowing an optimal solution to be obtained.

Note that, although the FMDA has been described in FIG. 3, the DA portion of the FMDA may be replaced with QA, and any other approach can be used as long as its Ising machine is capable of solving QUBO. In addition, apart from using an Ising machine dedicated to solving QUBO, the Ising model may be solved using software.

The sampling technique using a model in the QUBO format is an approach for sequentially sampling the recommended points on the Ising model, and thus, a sampling region may be likely to be limited. In addition, in the sampling technique using the Ising model in the QUBO format, sampling performance will vary depending on the training data group for generating the Ising model. In addition, since the FM is a quadratic Ising model, there is a possibility that the problem may not be fully expressed. From the above, the number of times of sampling will increase in order to enhance the search accuracy for an optimal solution.

Thus, in the following embodiment, an example in which the number of times of sampling may be reduced will be described.

[First Embodiment]

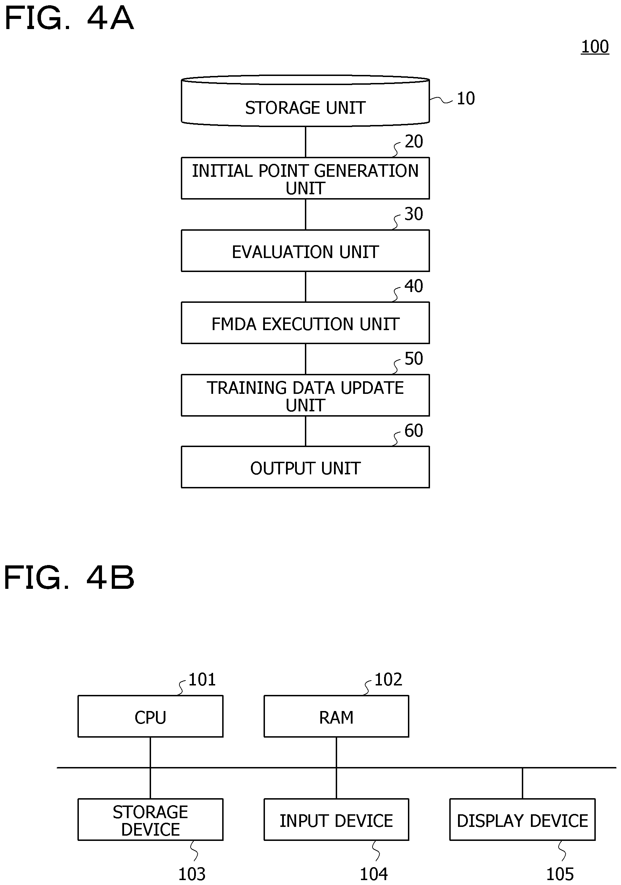

FIG. 4A is a block diagram illustrating an overall configuration of an information processing device 100. As illustrated in FIG. 4A, the information processing device 100 includes a storage unit 10, an initial point generation unit 20, an evaluation unit 30, an FMDA execution unit 40, a training data update unit 50, an output unit 60, and the like.

FIG. 4B is a block diagram illustrating a hardware configuration of the information processing device 100. As illustrated in FIG. 4B, the information processing device 100 includes a central processing unit (CPU) 101, a random access memory (RAM) 102, a storage device 103, an input device 104, a display device 105, and the like.

The central processing unit (CPU) 101 is a central processing device. The CPU 101 includes one or more cores. The random access memory (RAM) 102 is a volatile memory that temporarily stores a program to be executed by the CPU 101, data to be processed by the CPU 101, and the like. The storage device 103 is a nonvolatile storage device. As the storage device 103, for example, a read only memory (ROM), a solid state drive (SSD) such as a flash memory, a hard disk to be driven by a hard disk drive, or the like can be used. The storage device 103 stores an arithmetic program. The input device 104 is an input device such as a keyboard or a mouse. The display device 105 is a display device such as a liquid crystal display (LCD). The storage unit 10, the initial point generation unit 20, the evaluation unit 30, the FMDA execution unit 40, the training data update unit 50, the output unit 60, and the like are implemented by the CPU 101 executing the arithmetic program. Note that hardware such as a dedicated circuit may be used as the storage unit 10, the initial point generation unit 20, the evaluation unit 30, the FMDA execution unit 40, the training data update unit 50, the output unit 60, and the like.

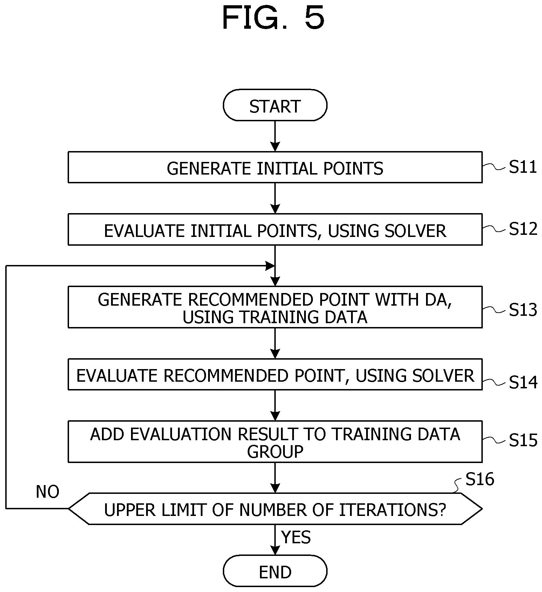

FIG. 5 is a flowchart representing an exemplary operation of the information processing device 100. As illustrated in FIG. 5, the initial point generation unit 20 generates a training data group by randomly generating initial points of the training data (step S11). The number of pieces of training data to be generated is determined by user setting. In addition, the initial points of the training data may be set by the user.

Next, the evaluation unit 30 calculates an evaluation value of each initial point, using the solver (step S12). The initial training data group in which the initial points obtained in step S11 and the evaluation values calculated in step S12 are collected as sets is stored in the storage unit 10.

Next, the FMDA execution unit 40 generates a DA recommended point, using the training data group stored in the storage unit 10 (step S13).

Next, the evaluation unit 30 calculates an evaluation value of the recommended point, using the solver (step S14).

Next, the training data update unit 50 adds an evaluation result (a set of the recommended point and the evaluation value) to the training data group as training data (step S15).

Next, the FMDA execution unit 40 verifies whether or not the number of iterations has reached an upper limit (step S16). The number of executions of step S16 can be treated as the number of iterations. The upper limit number of the number of iterations is preset by the user.

In a case where it is verified as "No" in step S16, step S13 and the subsequent steps are executed again. In a case where it is verified as "Yes" in step S16, the execution of the flowchart ends.

The output unit 60 outputs a result of the process in FIG. 5. For example, the output result is displayed on the display device 105. For example, the output unit 60 may output the contents of the training data group, or may output training data having a higher evaluation value in the training data group, as a good solution.

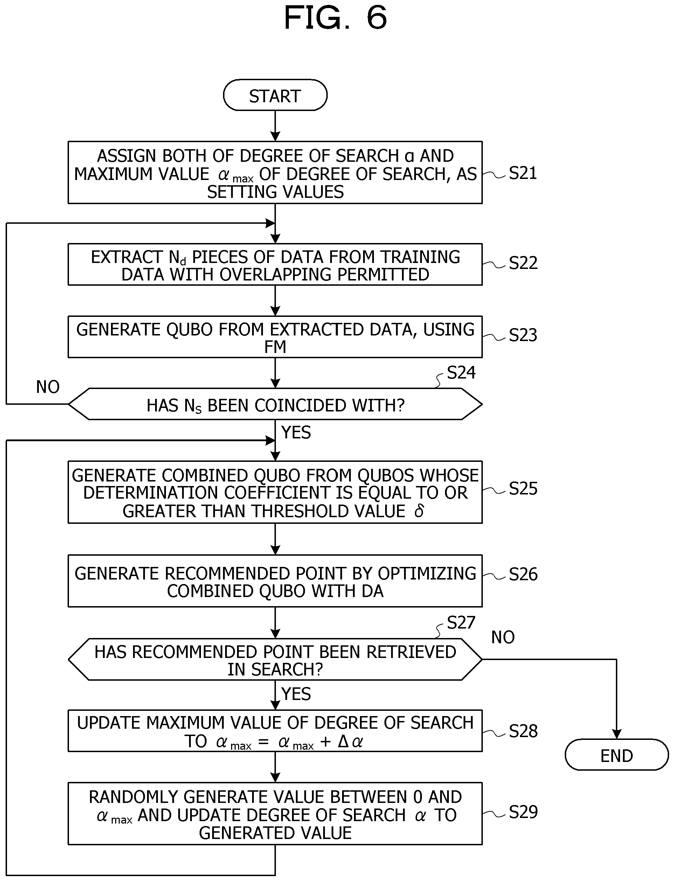

FIG. 6 is a flowchart representing details of step S13. As illustrated in FIG. 6, the FMDA execution unit 40 assigns both of a degree of search $\alpha$ and a maximum value $\alpha_{max}$ of the degree of search, as setting values (step S21). The degree of search $\alpha$ and the maximum value $\alpha_{max}$ of the degree of search are predefined by the user or the like.

Next, the FMDA execution unit 40 extracts $N_d$ pieces of training data as a training data set from the training data group stored in the storage unit 10 (step S22). The number of pieces of picked-up data predefined by the user or the like is denoted by $N_d$. The number denoted by $N_d$ is smaller than the number of pieces of training data included in the training data group.

Next, the FMDA execution unit 40 generates an FM from the training data set extracted in step S22 and generates an Ising model by converting the generated FM into QUBO (step S23). Since the FM is in the QUBO format, generating an FM is equivalent to generating an Ising model in the QUBO format. Any other machine learning model can also be used as long as the machine learning model can generate an Ising model in the QUBO format.

Next, the FMDA execution unit 40 verifies whether or not the number of times of generation of the Ising model in the QUBO format has coincided with a number Ns of generated QUBOs (step S24). In a case where it is verified as "No" in step S24, step S22 and the subsequent steps are executed again.

By repeatedly executing steps S22 to S24, Ns Ising models are generated. Note that the training data sets extracted every time step S22 is executed have at least partially different training data. For example, when data No. 1 to No. 10 are extracted at the first time and data No. 15 to No. 24 are extracted at the second time, partially overlapping but different data sets will be included. Alternatively, all the training data included in each training data set may be different for each training data set. For example, when data No. 1 to No. 10 are extracted at the first time and data No. 11 to No. 20 are extracted at the second time, all data will be different from each other.

Note that, in a case where a small number of pieces of training data are included in the training data group, it is preferable to make the training data sets partially overlapping each other when generating each training data set. For example, data No. 1 to No. 5 is assigned as a first training data set, data No. 2 to No. 6 is assigned as a second training data set, data No. 3 to No. 7 is assigned as a third training data set, and so forth. In this case, a plurality of types of training data sets can be generated even if the number of initial points is small.

In a case where it is verified as "Yes" in step S24, the FMDA execution unit 40 generates a combined QUBO from Ising models whose determination coefficient $R^2$ is equal to or greater than a threshold value $\delta$, according to an average and a deviation of the coefficients (step S25).

By repeating above step S23 to generate each Ising model, E(x) in the QUBO format described with reference to FIG. 1 is obtained each time. For each E(x), $W_{ij}$, $b_i$, and const. are all obtained. For each E(x), an average value of $W_{ij}$ is assumed as $W_{ij\_ave}$, an average value of $b_i$ is assumed as $bi\_ave$, and an average value of const. is assumed as const._ave. For each E(x), a standard deviation of $W_{ij}$ is assumed as $W_{ij\_}\sigma$, a standard deviation of $b_i$ is assumed as $b_{i\_}\sigma$, and a standard deviation of const. is assumed as const._$\sigma$. As an example, in E(x) in the QUBO format described with reference to FIG. 1, $W_{ij}$ is replaced with ($W_{ij\_ave} - \alpha \times W_{ij\_}\sigma$), $b_i$ is replaced with ($bi\_ave - \alpha \times b_{i\_}\sigma$), and const. is replaced with (const._ave - $\alpha \times$ const._$\sigma$). This produces a combined QUBO.

In this manner, by using the average of the coefficients each for one instance of E(x), a region having a good objective function value may be searched. Furthermore, since a region with a large deviation can also be searched, a region with an element of high uncertainty that has not yet been allowed to be searched may be searched. The greater the degree of search $\alpha$, the more the deviation is focused, and thus, a region with an element of high uncertainty may be actively searched. If the degree of search $\alpha$ is assigned as zero, a region having a good objective function value may be actively searched.

The determination coefficient $R^2$ is an index of the model accuracy, which represents that the closer to one, the better the accuracy of searching for a good solution with a high evaluation value. Note that, although the combined QUBO may be generated regardless of the determination coefficient, a combined QUBO with high accuracy may be generated by excluding an Ising model whose determination coefficient is less than the threshold value $\delta$.

The determination coefficient $R^2$ can be calculated by, for example, the following formula.

[Mathematical Formula 2]

$$R^2 = 1 - \frac{\sum_{i=1}^{n}(y_i - \hat{y})^2}{\sum_{i=1}^{n}(y_i - \bar{y})^2}$$

In the above, yi denotes an actually measured value. The following formula yields a predicted value.

[Mathematical Formula 3]

$$\hat{y}$$

The following formula yields an average value of actually measured values.

[Mathematical Formula 4]

$$\bar{y}$$

Next, the FMDA execution unit 40 generates a number of DA recommended points equal to a set number of DA recommendations, by optimizing the combined QUBO generated in step S25 with a DA (step S26). The set number of DA recommendations is preset by the user. The DA recommended point is a good solution (recommended point) giving the best evaluation value. Alternatively, the DA recommended point is a good solution (recommended point) having an evaluation value equal to or greater than a threshold value. Alternatively, the DA recommended points are good solutions (recommended points) having top evaluation values up to a predetermined place.

Next, the FMDA execution unit 40 verifies whether or not the recommended point obtained in step S26 is a point that has already been retrieved in search (step S27). For example, it is verified whether or not the recommended point obtained in step S26 is included in the training data group stored in the storage unit 10.

In a case where it is verified as "Yes" in step S27, the FMDA execution unit 40 updates the maximum value of the degree of search to $\alpha_{max} = \alpha_{max} + \Delta\alpha$ (step S28).

Next, the FMDA execution unit 40 randomly generates a value between 0 and $\alpha_{max}$ and updates the degree of search $\alpha$ to the generated value (step S29). Thereafter, step S25 and the subsequent steps are executed again.

In a case where it is verified as "No" in step S27, the execution of the flowchart ends.

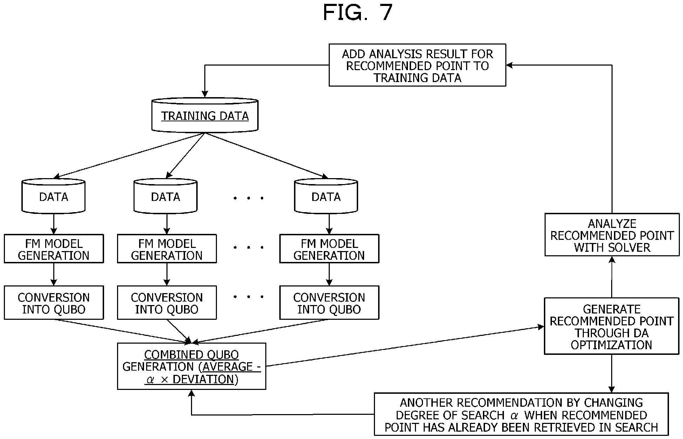

FIG. 7 is a diagram in which the present embodiment is summarized in order. As illustrated in FIG. 7, the initial points of the training data are generated. From this training data group, a plurality of types of training data equal to a designated number are extracted as training data sets. Next, for each training data set, an FM model is generated and converted into QUBO, and an Ising model is generated. According to an average and a deviation of the coefficients in the QUBO format, Ising models having the model accuracy equal to or greater than a threshold value are combined, and a combined QUBO is generated.

A combined QUBO is used to generate a recommended point through DA optimization. In a case where the recommended point has already been retrieved in search, the degree of search $\alpha$ is changed, a new combined QUBO is generated, and a recommended point by DA optimization is generated. When the recommended point has not been retrieved in search, the recommended point is analyzed by the solver, and an analysis result for the recommended point is added to the training data. Thereafter, a similar process is repeated with the updated training data.

According to the present embodiment, since a plurality of Ising models is generated, an average and a deviation of the coefficients ($W_{ij}$, $b_i$, const.) for each Ising model can be calculated. By considering not only the average but also the deviation of the coefficients when combining a plurality of Ising models, a region with an element of high uncertainty may be searched. Specifically, by combining the Ising models using (average - $\alpha \times$ deviation), not only a region having a good objective function value but also a region having a large deviation and having an element of high uncertainty that has not yet been allowed to be searched may be searched. This may suppress falling into a local solution, and as a result, may reduce the number of times of sampling.

When combining a plurality of Ising models, the accuracy of the combined QUBO may be enhanced by excluding an Ising model whose accuracy is less than a threshold value. Since at least two sets of the plurality of training data sets include training data overlapping each other, a plurality of Ising models may be generated even in a case where, for example, the number of pieces of training data such as the initial points is small. By changing the degree of search $\alpha$ and regenerating the combined QUBO in a case where the recommended point retrieved in search by the DA has already been retrieved in search, a search in an unsearched region may be enabled.

Note that, in the above, the degree of search $\alpha$ is updated as in step S29, but may be gradually updated using a step value between 0 and $\alpha_{max}$. Alternatively, the degree of search $\alpha$ may be updated according to the number of times of repetition of step S13.

(Simulation Result)

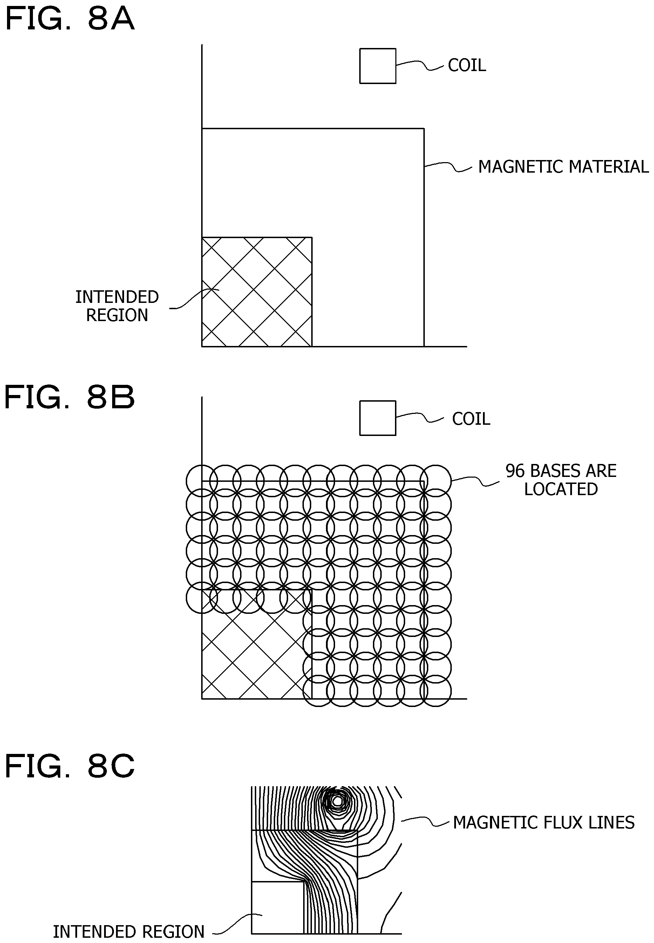

Hereinafter, a simulation result of setting a virtual problem and performing the arithmetic process according to the above embodiment will be described. FIG. 8A is a diagram illustrating an optimization problem for a magnetic shield. FIG. 8A depicts a magnetic shield analysis model and is a diagram illustrating a coil, a design region for a magnetic material, and an intended region. The intended region is a region where the influence of the magnetic flux is desired to be avoided. The design region for the magnetic material is a region for locating the magnetic material. FIG. 8B is a diagram illustrating locations by a Gaussian basis function. As illustrated in FIG. 8B, 96 magnetic materials can be located in the design region for the magnetic material. FIG. 8C is a diagram illustrating magnetic flux lines generated from the coil.

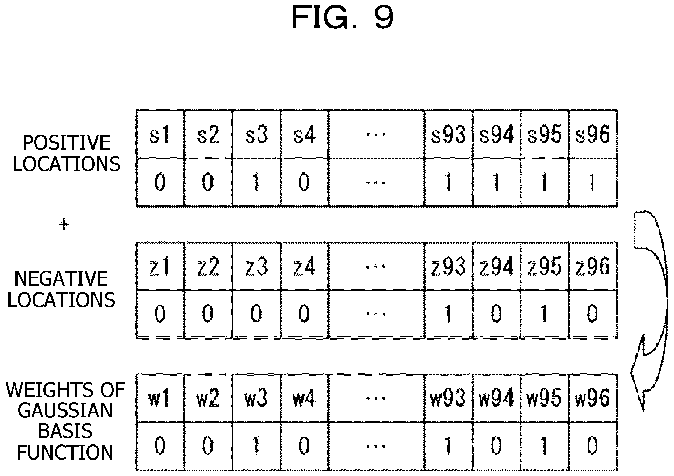

The tables in FIG. 9 are diagrams illustrating positive locations and negative locations. 96 positive located positions are indicated by s1 to s96. In s1 to s96, "0" represents that no magnetic material is located, and "1" represents that a magnetic material is located. 96 negative located positions are indicated by z1 to z96. In z1 to z96, "0" represents that no magnetic material is located, and "1" represents that a magnetic material is located.

This location problem can be represented as a shape function y as in the following formula. In the above formula, $s_i, z_i \in \{0, 1\}$ holds and $w_i \in \{-1, 0, 1\}$ holds. In this manner, the optimization problem for the magnetic shield is regarded as a positive-negative location problem of the Gaussian basis function.

[Mathematical Formula 5]

$$y(x, s, z) = \sum_{i=1}^{N_G} (s_i - z_i) \left\{ G_i(x) / \sum_{j=1}^{N_G} G_j(x) \right\}$$

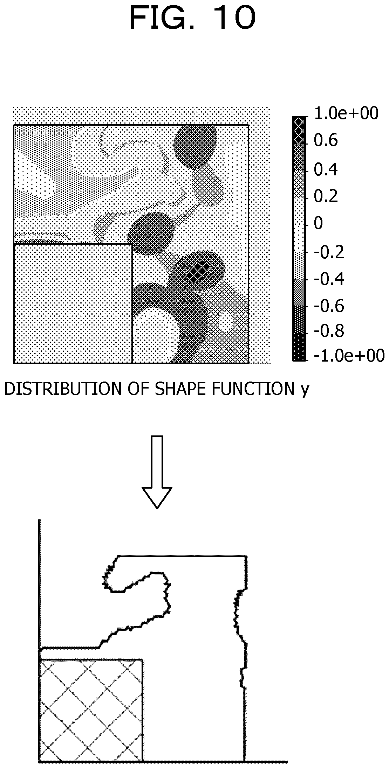

Distribution of the shape function y is as depicted in the upper diagram of FIG. 10. From this result, as depicted in the lower diagram of FIG. 10, material information can be determined from the magnitude of the shape function y. Note that, in the lower diagram of FIG. 10, when the shape function y has zero or greater, a substance is present, and when the shape function y is less than zero, no substance is present.

The purpose of the magnetic shield shape optimization is to minimize magnitude of the average magnetic flux density $B_{ave}{}^T$ and a magnetic material area $S_{mag}$ in the intended region. The minimization is specifically the minimization in the following formula. Note that $E_1$ has 1/10 of $B_{ave}{}^T$ when the entire design region is filled with air. $E_2$ denotes $S_{mag}$ when the entire design region is filled with the magnetic material.

[Mathematical Formula 6]

$$E = \frac{\beta_1}{E_1} B_{ave}^T + \frac{\beta_2}{E_2} S_{mag} \rightarrow \min.$$

Sampling was performed on this optimization problem by two types of approaches of an approach only with an FMDA and the approach of the present embodiment. As a common setting, the number of initial points was assumed as 96. The number of iterations was assumed as 192 times, and the threshold value $\delta$ was assumed as 0.85. The number $N_d$ of pieces of picked-up data was assumed as 400, and the number Ns of generated QUBOs was assumed as 10. Weights $\beta_1$ and $\beta_2$ of the objective function were both assumed as 0.5. In addition, the degree of search $\alpha$ was assumed as 0.5, and an amount of change $\Delta\alpha$ of the degree of search $\alpha$ was assumed as 0.1.

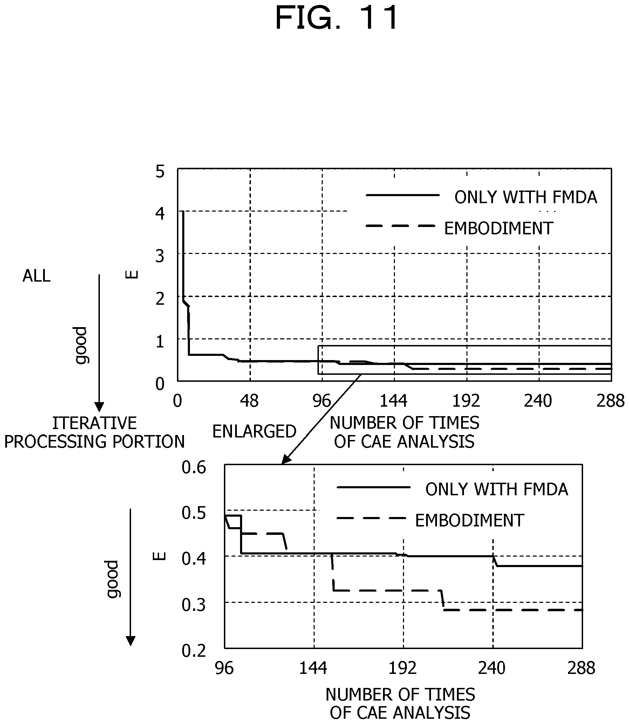

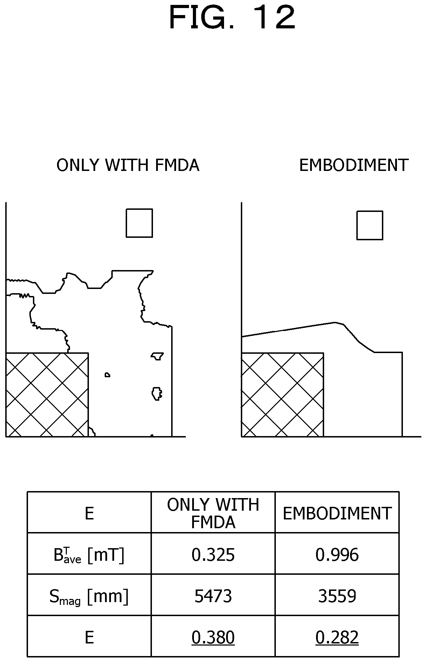

FIGs. 11 and 12 are diagrams indicating results. FIG. 11 indicates the best value found in the search. The vertical axis represents the energy E in the QUBO format. Therefore, in the vertical axis, a smaller value indicates that a better result is obtained. The number of computer aided engineering (CAE) analyses on the horizontal axis indicates the number of iterations. The diagram in the lower part of FIG. 11 is an enlarged diagram obtained by altering the scale of the vertical axis of the diagram in the upper part of FIG. 11. As indicated in FIGs. 11 and 12, it can be seen that the approach of the present embodiment was able to achieve sampling more efficiently than the approach with the FMDA.

In the above example, the FMDA execution unit 40 and the training data update unit 50 are an example of an execution unit that repeatedly executes a process including: generating a plurality of training data sets from a training data group; creating a plurality of Ising models by creating the Ising models for each of the plurality of training data sets; creating a combined Ising model by combining the plurality of Ising models according to an average and a deviation of coefficients of the plurality of Ising models; searching for a recommended point for the combined Ising model; and adding the recommended point and an evaluation value of the recommended point to the training data group.

While the embodiments have been described above in detail, the embodiments are not limited to such specified embodiments, and various modifications and alterations can be made within the scope of the gist of the embodiments described in the claims.

**Claims**

1. An arithmetic program comprising instructions which, when executed by a computer, cause the computer to repeatedly execute processing comprising:

   generating a plurality of training data sets from a training data group;
   creating a plurality of Ising models by creating the Ising models for each of the plurality of training data sets;
   creating a combined Ising model by combining the plurality of Ising models according to an average and a deviation of coefficients of the plurality of Ising models;
   searching for a recommended point for the combined Ising model; and
   adding the recommended point and an evaluation value of the recommended point to the training data group.

2. The arithmetic program according to claim 1, wherein, when the plurality of Ising models is combined, the Ising models whose accuracy is less than a threshold value are excluded.

3. The arithmetic program according to claim 1, wherein at least two sets of the plurality of training data sets include training data that overlaps each other.

4. The arithmetic program according to claim 1, wherein, in a case where the recommended point retrieved in the search is already included in the training data group, the combined Ising model is recreated by changing a degree of reflection of the deviation when the plurality of Ising models used to search for the recommended point is combined, and the recommended point is searched for, for the recreated combined Ising model.

5. The arithmetic program according to claim 1, wherein the coefficients are at least one of coupling coefficients, bias coefficients, or constant terms of the Ising models.

6. An arithmetic method implemented by a computer, comprising:

   generating a plurality of training data sets from a training data group;
   creating a plurality of Ising models by creating the Ising models for each of the plurality of training data sets;
   creating a combined Ising model by combining the plurality of Ising models according to an average and a deviation of coefficients of the plurality of Ising models;
   searching for a recommended point for the combined Ising model; and
   adding the recommended point and an evaluation value of the recommended point to the training data group, wherein
   the generating of the plurality of training, the creating of the plurality of Ising models, the creating of the combined Ising model, the searching for the recommended point, and the adding of the recommended point and the evaluation value are repeatedly executed by the computer.

7. An information processing apparatus comprising an execution unit configured to repeatedly perform processing comprising:

   generating a plurality of training data sets from a training data group;
   creating a plurality of Ising models by creating the Ising models for each of the plurality of training data sets;
   creating a combined Ising model by combining the plurality of Ising models according to an average and a deviation of coefficients of the plurality of Ising models;
   searching for a recommended point for the combined Ising model; and
   adding the recommended point and an evaluation value of the recommended point to the training data group.

# FIG. 1

FIG. 2A

CHARACTERISTIC
(OBJECTIVE
FUNCTION VALUE)　　　　　　　BINARY STRUCTURE DATA

| No. | y | $X_1$ | $X_2$ | $X_3$ | $X_4$ | $X_5$ | $X_6$ | $X_7$ | $X_8$ | $X_9$ | $X_{10}$ | . | . | . |
|---|---|---|---|---|---|---|---|---|---|---|---|---|---|---|
| 1 | 3.97 | 1 | 1 | 0 | 1 | 0 | 1 | 1 | 0 | 1 | 1 | | | |
| 2 | 4.49 | 1 | 0 | 1 | 1 | 1 | 1 | 1 | 1 | 0 | 0 | | | |
| 3 | 1.90 | 0 | 1 | 0 | 1 | 1 | 0 | 0 | 1 | 0 | 1 | | | |
| 4 | 1.79 | 0 | 0 | 1 | 1 | 1 | 0 | 0 | 0 | 1 | 1 | | | |
| 5 | 3.49 | 1 | 1 | 0 | 1 | 0 | 0 | 1 | 1 | 1 | 0 | | | |
| 6 | 2.71 | 0 | 1 | 1 | 1 | 0 | 1 | 1 | 0 | 1 | 1 | | | |
| 7 | 0.65 | 1 | 1 | 1 | 0 | 1 | 0 | 0 | 1 | 1 | 1 | | | |
| 8 | 0.68 | 1 | 0 | 1 | 0 | 1 | 1 | 0 | 0 | 1 | 1 | | | |
| 9 | 5.18 | 0 | 1 | 0 | 1 | 0 | 1 | 0 | 0 | 1 | 1 | | | |
| 10 | 3.82 | 0 | 0 | 0 | 1 | 0 | 1 | 0 | 1 | 0 | 1 | | | |
| . | . | | | | | | | | | | | . | | |
| . | . | | | | | | | | | | | | . | |
| . | . | | | | | | | | | | | | | . |

POINTS THAT ARE GOING TO BE
ANALYZED NEXT
(BINARY STRUCTURE DATA)

FIG. 2B

| $X_1$ | $X_2$ | $X_3$ | $X_4$ | $X_5$ | $X_6$ | . | . | . |
|---|---|---|---|---|---|---|---|---|
| 1 | 1 | 1 | 1 | 1 | 0 | | | |

# FIG. 3

```
                    ┌─────────────┐
                    │   START     │
                    └─────────────┘
                           │
                           ▼
        ┌────────────────────────────────────┐
        │      GENERATE INITIAL POINTS        │ ～S1
        └────────────────────────────────────┘
                           │
                           ▼
        ┌────────────────────────────────────┐
        │  EVALUATE INITIAL POINTS, USING SOLVER │ ～S2
        └────────────────────────────────────┘
                           │
                           ▼
        ┌────────────────────────────────────┐
        │     GENERATE MODEL IN QUBO FORMAT   │ ～S3
        └────────────────────────────────────┘
                           │
                           ▼
        ┌────────────────────────────────────┐
        │  GENERATE DA RECOMMENDED POINT THROUGH │ ～S4
        │    QUBO OPTIMIZATION WITH DA        │
        └────────────────────────────────────┘
                           │
                           ▼
        ┌────────────────────────────────────┐
        │ EVALUATE RECOMMENDED POINT, USING SOLVER │ ～S5
        └────────────────────────────────────┘
                           │
                           ▼
        ┌────────────────────────────────────┐
        │  ADD EVALUATION RESULT TO TRAINING DATA │ ～S6
        └────────────────────────────────────┘
                           │
                           ▼
  NO  ╱────────────────────────────────────────╲ S7
 ◄────   UPPER LIMIT OF NUMBER OF ITERATIONS?
      ╲────────────────────────────────────────╱
                           │ YES
                           ▼
                    ┌─────────────┐
                    │    END      │
                    └─────────────┘
```

# FIG. 4A

100

- STORAGE UNIT — 10
- INITIAL POINT GENERATION UNIT — 20
- EVALUATION UNIT — 30
- FMDA EXECUTION UNIT — 40
- TRAINING DATA UPDATE UNIT — 50
- OUTPUT UNIT — 60

# FIG. 4B

- CPU — 101
- RAM — 102
- STORAGE DEVICE — 103
- INPUT DEVICE — 104
- DISPLAY DEVICE — 105

# FIG. 5

```
        ┌─────────────┐
        │    START    │
        └──────┬──────┘
               │
               ▼
┌──────────────────────────────────┐
│      GENERATE INITIAL POINTS      │ ~S11
└──────────────┬───────────────────┘
               │
               ▼
┌──────────────────────────────────┐
│  EVALUATE INITIAL POINTS, USING SOLVER │ ~S12
└──────────────┬───────────────────┘
               │
               ▼
┌──────────────────────────────────┐
│  GENERATE RECOMMENDED POINT WITH DA,  │ ~S13
│       USING TRAINING DATA         │
└──────────────┬───────────────────┘
               │
               ▼
┌──────────────────────────────────┐
│ EVALUATE RECOMMENDED POINT, USING SOLVER │ ~S14
└──────────────┬───────────────────┘
               │
               ▼
┌──────────────────────────────────┐
│  ADD EVALUATION RESULT TO TRAINING DATA │ ~S15
│              GROUP                │
└──────────────┬───────────────────┘
               │                            S16
   NO          ▼
◁──────< UPPER LIMIT OF NUMBER OF ITERATIONS? >
               │ YES
               ▼
        ┌─────────────┐
        │     END     │
        └─────────────┘
```

# FIG. 6

START

ASSIGN BOTH OF DEGREE OF SEARCH α AND MAXIMUM VALUE $\alpha_{max}$ OF DEGREE OF SEARCH, AS SETTING VALUES —— S21

EXTRACT $N_d$ PIECES OF DATA FROM TRAINING DATA WITH OVERLAPPING PERMITTED —— S22

GENERATE QUBO FROM EXTRACTED DATA, USING FM —— S23

S24

NO ◁—— HAS $N_s$ BEEN COINCIDED WITH? ——▷

YES

GENERATE COMBINED QUBO FROM QUBOS WHOSE DETERMINATION COEFFICIENT IS EQUAL TO OR GREATER THAN THRESHOLD VALUE $\delta$ —— S25

GENERATE RECOMMENDED POINT BY OPTIMIZING COMBINED QUBO WITH DA —— S26

S27                                    NO

◁—— HAS RECOMMENDED POINT BEEN RETRIEVED IN SEARCH? ——▷

YES

UPDATE MAXIMUM VALUE OF DEGREE OF SEARCH TO $\alpha_{max} = \alpha_{max} + \Delta\alpha$ —— S28

RANDOMLY GENERATE VALUE BETWEEN 0 AND $\alpha_{max}$ AND UPDATE DEGREE OF SEARCH $\alpha$ TO GENERATED VALUE —— S29

END

FIG. 7

# FIG. 8A

COIL

MAGNETIC MATERIAL

INTENDED REGION

# FIG. 8B

COIL

96 BASES ARE LOCATED

# FIG. 8C

MAGNETIC FLUX LINES

INTENDED REGION

FIG. 9

POSITIVE
LOCATIONS

| s1 | s2 | s3 | s4 | ... | s93 | s94 | s95 | s96 |
|----|----|----|----|-----|-----|-----|-----|-----|
| 0 | 0 | 1 | 0 | ... | 1 | 1 | 1 | 1 |

+

NEGATIVE
LOCATIONS

| z1 | z2 | z3 | z4 | ... | z93 | z94 | z95 | z96 |
|----|----|----|----|-----|-----|-----|-----|-----|
| 0 | 0 | 0 | 0 | ... | 1 | 0 | 1 | 0 |

WEIGHTS OF
GAUSSIAN
BASIS
FUNCTION

| w1 | w2 | w3 | w4 | ... | w93 | w94 | w95 | w96 |
|----|----|----|----|-----|-----|-----|-----|-----|
| 0 | 0 | 1 | 0 | ... | 1 | 0 | 1 | 0 |

# FIG. 10

DISTRIBUTION OF SHAPE FUNCTION y

# FIG. 11

# FIG. 12

ONLY WITH FMDA          EMBODIMENT

| E | ONLY WITH FMDA | EMBODIMENT |
|---|---|---|
| $B_{ave}^{T}$ [mT] | 0.325 | 0.996 |
| $S_{mag}$ [mm] | 5473 | 3559 |
| E | <u>0.380</u> | <u>0.282</u> |

Europäisches
Patentamt

European
Patent Office

Office européen
des brevets

# EUROPEAN SEARCH REPORT

**Application Number**

EP 24 19 8411

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WILSON BLAKE A ET AL: "Machine learning framework for quantum sampling of highly constrained, continuous optimization problems", APPLIED PHYSICS REVIEWS, AMERICAN INSTITUTE OF PHYSICS, 2 HUNTINGTON QUADRANGLE, MELVILLE, NY 11747, vol. 8, no. 4, 29 December 2021 (2021-12-29), XP012262363, DOI: 10.1063/5.0060481 [retrieved on 2021-12-29] * Appendix B-E; page 1 - page 3; figure 1 * | 1-7 | INV. G06N5/01 G06N7/01 ADD. G06N10/60 |
| X | TADAYOSHI MATSUMORI ET AL: "Application of QUBO solver using black-box optimization to structural design for resonance avoidance", ARXIV.ORG, CORNELL UNIVERSITY LIBRARY, 201 OLIN LIBRARY CORNELL UNIVERSITY ITHACA, NY 14853, 20 July 2022 (2022-07-20), XP091275288, DOI: 10.1038/S41598-022-16149-8 * Algorithm 1; page 1 - page 4; figure 1 * * page 8 - page 10 * | 1-7 | |
| A | MARUO AKITO ET AL: "Topology Optimization of Electromagnetic Devices Using Digital Annealer", IEEE TRANSACTIONS ON MAGNETICS, IEEE, USA, vol. 58, no. 9, 21 June 2022 (2022-06-21), pages 1-4, XP011918236, ISSN: 0018-9464, DOI: 10.1109/TMAG.2022.3184325 [retrieved on 2022-06-22] * the whole document * | 1-7 | |

**TECHNICAL FIELDS SEARCHED (IPC)**

G06N

The present search report has been drawn up for all claims

| Place of search | Date of completion of the search | Examiner |
|---|---|---|
| The Hague | 17 February 2025 | Cilia, Elisa |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021059604 A
- JP 2021504836 A

- JP 2021149160 A